## Europäisches Patentamt

## European Patent Office

## Office européen des brevets

(19)

(11) Veröffentlichungsnummer: **0 005 157**
**B1**

(12) **EUROPÄISCHE PATENTSCHRIFT**

(45) Veröffentlichungstag der Patentschrift:
16.09.81

(21) Anmeldenummer: 79100774.3

(22) Anmeldetag: 15.03.79

(51) Int. Cl.³: **H 04 Q 11/04**

(54) **Mehrstufiges, eine Umkehrgruppierung aufweisendes Koppelnetz für eine PCM-Vermittlungsanlage.**

(30) Priorität: **29.04.78 DE 2819126**

(43) Veröffentlichungstag der Anmeldung:
**14.11.79 Patentblatt 79/23**

(45) Bekanntmachung des Hinweises auf die Patenterteilung:
**16.09.81 Patentblatt 81/37**

(84) Benannte Vertragsstaaten:
**BE CH FR GB IT NL SE**

(56) Entgegenhaltungen:
**DE-A-2 415 367**
**DE-A-2 454 144**
**DE-B-2 454 090**

(73) Patentinhaber: **Telefonbau und Normalzeit GmbH,**
**Mainzer Landstrasse 128-146 Postfach 4432,**
**D-6000 Frankfurt (Main) (DE)**

(72) Erfinder: **Agricola, Manfred, Dipl.-Ing.,**
**Zeuläckerstrasse 10B, D-6000 Frankfurt/M. 60 (DE)**
Erfinder: **Krautkrämer, Willfried, Dipl.-Ing.,**
**Waldschulstrasse 115, D-6230 Frankfurt 80 (DE)**
Erfinder: **Reimer, Karl-Heinz, Brandenburgerstrasse 1,**
**D-6051 Ober-Roden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Mehrstufiges, eine Umkehrgruppierung aufweisendes Koppelnetz für eine PCM-Vermittlungsanlage

Die Erfindung betrifft ein mehrstufiges, eine Umkehrgruppierung aufweisendes Koppelnetz zur vierdrahtigen Durchschaltung von Verbindungen zwischen Anschlussleitungen einer PCM-Vermittlungsanlage mit Zeit- und Raumkoppelstufen, wobei die erste Koppelstufe aus einzelnen Koppelgruppen besteht.

Koppelnetze dienen zur Verbindungsherstellung zwischen Anschlussleitungen in Fernmeldevermittlungsanlagen. Dabei werden zwei Arten der Durchschaltung der Verbindung unterschieden, und zwar die räumliche und die zeitliche Durchschaltung. Die räumliche Durchschaltung setzt zu diesem Zweck Koppelelemente voraus, die zeitweise geschlossen werden, während bei der zeitlichen Durchschaltung jeweils einer Verbindung ein periodisch wiederkehrender Zeitschlitz oder Zeitkanal zugeordnet wird.

Für PCM-Koppelnetze ist es bereits bekannt, Koppelnetze aus Zeit- und Raumkoppelstufen zu bilden. Die Anzahl der Koppelstufen wird dabei von der Grösse des Koppelnetzes, d.h. von der zu bewältigenden Verkehrsmenge und von dem Aufbau des Koppelnetzes bestimmt.

Bei dem Aufbau eines Koppelnetzes wird grundsätzlich zwischen zwei Gruppierungen unterschieden, und zwar sind bei der gestreckten Gruppierung Anschlüsse auf beiden Seiten des Koppelnetzes möglich, während bei der Umkehrgruppierung alle Anschlüsse auf der einen Seite des Koppelnetzes liegen. Koppelnetze mit der zuletzt genannten Gruppierung zeichnen sich besonders durch eine nahezu vollkommene Erreichbarkeit der abgehenden Leitungen aus. Ein solches Koppelnetz wird beispielsweise in der Zeitschrift «Informationen Fernsprechvermittlungstechnik», 6. Jahrgang (1970) Heft 1/2 auf den Seiten 28–33 beschrieben.

Wird nun in einem PCM-Koppelnetz als erste Koppelstufe ein Koppelfeld mit zeitlicher Durchschaltung gewählt, so ist aus übertragungs- und verkehrstechnischen Gründen die Anzahl der an eine Sende- und an eine Empfangssammelschiene anschaltbaren Anschlussleitungen begrenzt. Sollen nun weitere Anschlussleitungen mit dem Koppelnetz verbunden werden, so wird die erste Koppelstufe in Koppelgruppen unterteilt, wobei die Verbindungen zwischen Anschlussleitungen unterschiedlicher Koppelgruppen über eine zweite Koppelstufe durchgeführt werden. Da auch die Leistungsfähigkeit der zweiten Koppelstufe begrenzt ist, ist es zweckmässig, die Koppelgruppen in Grossgruppen zusammenzufassen und die Verbindungen zwischen den Grossgruppen über eine dritte Koppelstufe durchzuschalten, usw.

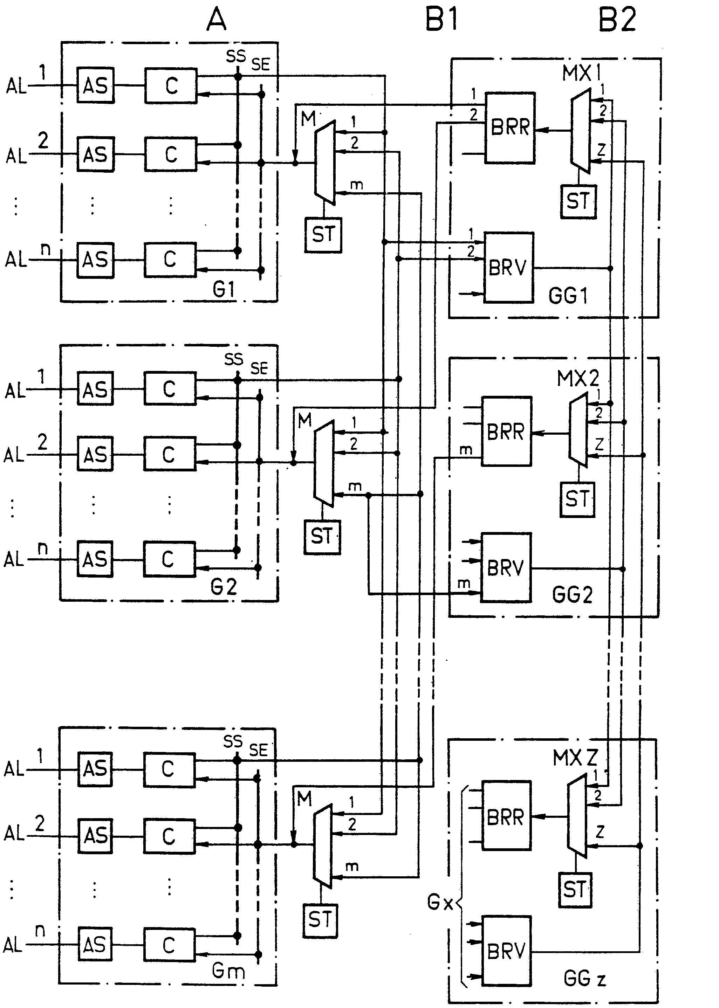

In der DE-AS 24 15 367 wird ein mehrstufiges PCM-Koppelnetz mit Raum-Zeit-Koppelstufen für eine Durchgangsvermittlungsstelle beschrieben, welches entweder als Koppelnetz mit gestreckter (Fig. 2) oder auch mit einer Umkehrgruppierung (Fig. 1) ausgebildet sein kann. Durch die Verwendung von kombinierten Raum-Zeit-Koppelstufen werden zwar günstigere Verkehrseigenschaften erreicht, andererseits ist der Aufwand pro PCM-Leitung wegen der leitungsindividuellen Informationsspeicher relativ hoch.

Weiterhin ist aus der DE-AS 24 54 090 und der DE-OS 24 54 114 jeweils ein mehrstufiges, eine Umkehrgruppierung aufweisendes Koppelfeld bekannt, welches aus reinen Zeitmultiplexkoppelstufen gebildet wird.

Die Aufgabe der vorliegenden Erfindung besteht nun darin, ein PCM-Koppelnetz aus Zeit- und Raumkoppelstufen zu bilden, wobei die einzelnen Koppelstufen so angeordnet sind, dass deren Eigenschaften optimal ausgenutzt werden und der technische Aufwand gering bleibt.

Diese Aufgabe wird erfindungsgemäss dadurch gelöst, dass die zweite (Raum-)Koppelstufe aus ebensovielen PCM-Leitungen gebildet wird, wie Koppelgruppen in der ersten (Zeit-)Koppelstufe vorhanden sind, wobei jeweils die Sendesammelschiene einer Koppelgruppe der ersten (Zeit-)Koppelstufe mit der entsprechenden PCM-Leitung der zweiten (Raum-)Koppelstufe verbunden ist, dass alle PCM-Leitungen dieser Koppelstufe jeweils an einem koppelgruppenindividuellen Multiplexer angeschlossen sind, welcher seinerseits über einen Ausgang Zugang zu der Empfangssammelschiene der betreffenden Koppelgruppe der ersten (Zeit-)Koppelstufe hat und dass eine dritte (Raum-)Kopelstufe ankommend mit den Sendesammelschienen und abgehend mit den Empfangssammelschienen der einzelnen Koppelgruppen der (Zeit-)Koppelstufe verbunden ist.

Die Durchschaltung von Verbindungen zwischen an der ersten (Zeit-)Koppelstufe angeschlossenen Anschlussleitungen erfolgt entweder über die zweite (Raum-) oder über die parallelgeschaltete dritte (Raum-)Koppelstufe. Auf diese Weise lässt sich eine leichte Erweiterbarkeit erzielen, da bei kleinen Ausbaustufen nur eine zweite (Raum-)Koppelstufe vorhanden ist und die dritte (Raum-)Koppelstufe erst bei mehr als einer Grossgruppe benötigt wird.

Eine vorteilhafte Weiterbildung der Erfindung besteht darin, dass die dritte (Raum-)Koppelstufe als sekundäres PCM-System ausgebildet ist, wobei dessen Bitrate ein Vielfaches der Bitrate der beiden ersten Koppelstufen beträgt und die Schnittstelle für die Eingangs- und Ausgangsleitungen durch Bitratenumsetzer gebildet wird. Durch die Erhöhung der Bitrate in der dritten Stufe kann diese so ausgebildet werden, dass sie den gesamten Verkehr der zweiten Koppelstufe übernehmen kann. Hierdurch wird eine echte Verdoppelung der Verbindungsmöglichkeiten zwischen den einzelnen Koppelgruppen erreicht.

Eine vorteilhafte Weiterbildung der Erfindung besteht auch darin, dass jeweils mehrere Koppelgruppen der ersten (Zeit-)Koppelstufe zu einer Grossgruppe zusammengefasst sind, dass die dritte (Raum-)Koppelstufe aus ebensovielen PCM-Leitungen gebildet wird, wie Grossgruppen vorhanden sind und dass alle PCM-Leitungen der dritten (Raum-)Koppelstufe jeweils an einem grossgruppenindividuellen Multiplexer angeschlossen sind. Die dritte (Raum-)Koppelstufe einschliesslich Multiplexer ist damit ebenso aufgebaut wie die zweite (Raum-)Koppelstufe, hierdurch ergeben sich für beide Koppelstufen gleiche Steuerungsstrukturen.

Eine Weiterbildung der Erfindung besteht auch darin, dass die Multiplexer der zweiten und dritten (Raum-)Koppelstufe mit jeweils einem Steuerspeicher ausgerüstet sind, welcher ebensoviele Speicherplätze besitzt, wie Zeitkanäle innerhalb eines Zyklus vorhanden sind, und in welchen die Koppel- bzw. die Grossgruppennummer des betreffenden Zeitkanals eingetragen wird, dessen PCM-Wort für die Koppel- bzw. Grossgruppe des betreffenden Multiplexers bestimmt ist. Da keine Zeitlagenumsetzung stattfindet, ist der Aufwand in der zweiten und dritten (Raum-)Koppelstufe gering.

Eine Weiterbildung der Erfindung besteht auch darin, dass die Multiplexer der zweiten und dritten (Raum-) Koppelstufe mit jeweils einem weiteren Speicher versehen sind, welcher die Umsetzung von PCM-Worten in unterschiedliche Zeitlagen ermöglicht. Mit dieser Einrichtung kann eine Raum-Koppelstufe zu einer kombinierten Raum-Zeit-Koppelstufe erweitert werden, wobei günstigere Verkehrseigenschaften durch die Vermeidung der Verwendung der gleichen Zeitkanäle in allen Koppelstufen (Gefahr der Blockierung) erzielt werden.

Eine vorteilhafte Weiterbildung der Erfindung besteht auch darin, dass die PCM-Leitung der zweiten (Raum-)Koppelstufe jeweils einer Grossgruppe an die Bitratenumsetzer mehrerer Grossgruppen angeschlossen sind. Durch diese Massnahme wird eine erhöhte Betriebssicherheit erreicht, da durch den Ausfall eines Multiplexers in einer der beiden (Raum-)Koppelstufen zwar die Verkehrsleistung eingeschränkt, die Erreichbarkeit jedoch voll aufrecht erhalten wird.

Weitere Vorteile ergeben sich aus den Unteransprüchen.

Die Erfindung wird anhand eines Ausführungsbeispiels näher erläutert, welches in der Zeichnung dargestellt ist.

Das mehrstufige Koppelfeld wird aus der Zeitmultiplexkoppelstufe A und den beiden Raummultiplexkoppelstufen B1 und B2 gebildet. Die Zeitmultiplexkoppelstufe A besteht aus den Koppelgruppen G1 bis Gm, wobei an jeder dieser Koppelgruppen G eine Anzahl von Anschlussleitungen AL1 bis ALn angeschlossen werden kann. Diese Anschlussleitungen AL sind normale analoge Anschlussleitungen oder sogenannte 1-Kanal-Anschlussleitungen, wie beispielsweise Teilnehmeranschlussleitungen, Verbindungsleitungen zu analogen Vermittlungsanlagen, Leitungen zu Bedienplätzen, usw. Jede dieser Anschlussleitungen AL ist mit einer eigenen Anschlussschaltung AS verbunden, welche Einrichtungen zur Speisung, Erkennung des Leitungszustandes (Schleife offen, Schleife geschlossen) usw. enthält. Ausserdem ist eine Gabelschaltung vorhanden, welche die zweiadrige Leitung in einen abgehenden und einen ankommenden Zweig aufteilt, wobei an dem abgehenden Zweig der Codierer und an dem ankommenden Zweig der Decodierer eines Codecs C angeschlossen ist. Bei diesem Codec C handelt es sich um einen sogenannten A/D-(Analog/Digital) und einen D/A-(Digital/Analog) Wandler zur Umsetzung der analogen Sprachsignale in PCM-Worte und umgekehrt. Ausserdem besitzt der Codec C ein aus zwei Speicherplätzen bestehendes Register, in welches die der jeweiligen Verbindung zugeteilten Zeitkanaladressen für die abgehende und ankommende Richtung für die Dauer der Verbindung eingetragen werden, weiterhin ist ein Zeitkanaladressgenerator entweder pro Koppelgruppe G oder pro Codec C vorhanden, ebenso besitzt jeder Codec C eine Vergleichseinrichtung, welche denjeweiligen Zählerstand des Zählers des Zeitkanaladressgenerators mit dem Inhalt der beiden Zeitkanaladressregister vergleicht. Der Zähler besitzt ebensoviele Zählschritte wie Zeitkanäle innerhalb eines Zyklus oder Rahmens vorhanden sind, beispielsweise 32. Die abgehende Leitung des Codec C ist mit einer Sendesammelschiene SS und die ankommende Leitung des Codec C ist mit einer Empfangssammelschiene SE verbunden. Jede Koppelgruppe besitzt ein individuelles Sammelschienenpaar SS und SE. Dabei bilden diese Sammelschienenpaare der einzelnen Koppelgruppen G1 bis Gm die Koppelstufe A. Bei einer Wortbreite der einzelnen PCM-Worte von 8 Bit beträgt die Bitrate auf den beiden Sammelschienen 2,048 MBit/s.

Die Koppelstufe B1 wird aus PCM-Leitungen gebildet, wobei für jede Koppelgruppe G1 bis Gm eine Leitung vorhanden ist, die Koppelstufe B1 besteht demnach aus m-PCM-Leitungen. An der jeweiligen PCM-Leitung ist die Sendesammelschiene SS der betreffenden Koppelgruppe G angeschlossen. An allen PCM-Leitungen der Koppelstufe B1 ist ein koppelgruppenindividueller Multiplexer M mit m-Eingängen angeschlossen. Jeder dieser Multiplexer M tastet gleichzeitig parallel jeweils den gleichen Zeitkanal aller Koppelgruppen G ab, sein Ausgang ist mit der Empfangssammelschiene SE der betreffenden Koppelgruppe G verbunden. Jeder Multiplexer M besitzt einen Steuerspeicher ST, welcher für jeden Zeitkanal (32) einen Speicherplatz besitzt und zum Einspeichern der Koppelgruppennummer dient. Auf diese Weise wird die Koppelgruppe G und damit die PCM-Leitung am Eingang des Multiplexers M gekennzeichnet, welche einen Zeitkanal benutzt, dessen PCM-Worte für diejenige Koppelgruppe G bestimmt sind, welcher der betreffende Multiplexer M zugeordnet ist. In den Steuerspeicher wird also in den Speicherplatz des betreffenden Zeitkanals jeweils die betreffende Koppelgruppennummer eingetragen. Dieser Vorgang gilt für beide Übertragungsrichtungen gleichermassen. Weiterhin kann jeder Multiplexer M einen nicht gezeigten Ausgangsspeicher besitzen, welcher für jeden Zeitkanal einen Speicherplatz zum Einspeichern jeweils eines PCM-Wortes aufweist. Er dient zur Umsetzung der PCM-Worte auf andere Zeitkanäle, wenn in beiden Koppelgruppen G für eine Verbindung nicht der gleiche Zeitkanal benutzt werden kann. Zur Ansteuerung der Speicherplätze der beiden Speicher ist für jeden Multiplexer M ein besonderer Generator zur Erzeugung der Zeitkanaladressen vorhanden.

Alle Verbindungen zwischen Anschlussleitungen AL derselben Koppelgruppe werden ebenso wie Verbindungen zwischen Anschlussleitungen unterschiedlicher Koppelgruppen grundsätzlich über die Koppelstufe B1 abgewickelt. Ist nur eine Koppelgruppe G vorhanden, dann ist anstelle des Sammelschienenpaares SS und SE nur eine gemeinsame Sammelschiene für beide Richtungen vorhanden, eine Koppelstufe B1 wird in diesem Fall nicht benötigt.

Es ist auch möglich eine PCM-Verbindungsleitung von einer anderen PCM-Vermittlungsstelle an dem PCM-Koppelfeld anzuschliessen. Dies geschieht durch Verbindung der ankommenden und der abgehenden Leitung der Verbindungsleitung mit der Sende- bzw. Empfangssammelschiene SS bzw. SE einer Koppelgruppe G, an welcher weiter keine analogen Anschlussschaltungen AS angeschlossen sind. Jede der beiden Leitungen der PCM-Verbindungsleitung ist dabei mit einem Kennzeichenumsetzer und einer Zeitstufe (Zeitlagenumsetzer) auszurüsten.

Aus technologischen und verkehrstechnischen Gründen ist die Anzahl der Koppelstufen G, die an einer gemeinsamen Koppelstufe B1 angeschlossen werden können, begrenzt. Sollen nun weitere Koppelgruppen G an dem PCM-Koppelnetz angeschlossen werden, so werden jeweils einige Koppelgruppen G1 bis Gx an einer Grossgruppe GG einer zweiten Raummultiplexkoppelstufe B2 angeschlossen. Der Aufbau dieser Koppelgruppe B2 ähnelt sehr stark dem Aufbau der Koppelstufe B1. Die Koppelstufe B2 wird wiederum aus einer Anzahl von PCM-Leitungen gebildet, wobei ebensoviele PCM-Leitungen wie Grossgruppen GG vorhanden sind (z). An jeder dieser PCM-Leitungen ist jeweils ein grossgruppenindividueller Multiplexer MX1 bis MXz mit z-Eingängen angeschlossen. Die Übertragungsgeschwindigkeit auf den PCM-Leitungen der Koppelstufe B2 beträgt jedoch nicht wie bei der Koppelstufe B1 2,048 MBit/s, sondern ein Vielfaches davon, beispielsweise 8,192 MBit/s. Das bedeutet, dass zwischen der Koppelstufe B1 und der Koppelstufe B2 eine Geschwindigkeitsumwandlung stattfinden muss (sekundäres PCM-System). Dies geschieht jeweils durch die Bitratenumsetzer BRV (für die Vorwärtsrichtung) und BRR (für die Rückwärtsrichtung). Bei dem angenommenen Beispiel wird auf diese Weise eine Übertragung von 128 anstelle von 32 Kanälen innerhalb der gleichen Zeit ermöglicht. Das bedeutet, dass jeweils vier Koppelgruppen G bei diesem Beispiel eine Grossgruppe GG bilden. So sind jeweils die Sendesammelschienen SS jeder der vier Koppelgruppen G mit dem Bitratenumsetzer BRV der dazugehörigen Grossgruppe GG verbunden. Für die umgekehrte Richtung ist jeweils der Bitratenumsetzer am Ausgang des Multiplexers MX einer Grossgruppe GG angeschlossen, wobei jeweils ein Ausgang des Bitratenumsetzers BRR dem Ausgang des Multiplexers M der betreffenden Koppelgruppe G parallel geschaltet ist. Der Multiplexer MX jeder Grossgruppe GG ist ebenso wie der Multiplexer M der Koppelgruppe G aufgebaut, d.h. er besitzt z-Eingänge, an denen jeweils die PCM-Leitungen der Koppelstufe B2 angeschlossen sind. Jeder Multiplexer MX tastet gleichzeitig parallel jeweils den gleichen Zeitkanal aller Grossgruppen ab.

Die Bitratenumsetzer BRV und BRR sind folgendermassen aufgebaut: Sie bestehen aus je zwei 8-Bit Schieberegistern, wobei beide Schieberegister parallel geschaltet sind. Bei dem Bitratenumsetzer BRV wird in das Empfangsschieberegister das PCM-Wort mit einer Taktfrequenz von 2,048 MBit/s eingeschoben, sobald es vollständig in diesem Register enthalten ist, wird es parallel in das Sendeschieberegister geladen und anschliessend mit der Taktfrequenz von 8,192 MBit/s ausgesendet. Die Zusammensetzung der PCM-Worte dieses sekundären PCM-Systems (Koppelstufe B2) kann nun entweder so geschehen, dass jeweils vier PCM-Worte hintereinander der gleichen Grossgruppe GG oder vier PCM-Worte aus verschiedenen Grossgruppen GG hintereinander in die Koppelstufe B2 übernommen werden. Auf diese Weise wird das Koppelnetz bei Ausfall eines Multiplexers MX weniger beeinträchtigt.

Die Umsetzung des Bitstromes von 8,129 MBit/s auf vier einzelne Bitströme von jeweils 2,048 MBit/s geschieht ebenso mittels zweier parallelgeschalteter Schieberegister, wobei das Empfangsschieberegister mit einem PCM-Wort des sekundären PCM-Systems geladen wird, welches dann in das Sendeschieberegister übernommen wird und anschliessend mit 2,048 MBit/s ausgesendet wird.

Jeder Multiplexer MX besitzt einen Steuerspeicher ST, welcher für jeden Zeitkanal (128) einen Speicherplatz besitzt und zum Einspeichern der Grossgruppennummer dient. Auf diese Weise wird die Grossgruppe GG und damit die PCM-Leitung am Eingang des Multiplexers MX gekennzeichnet, welche einen Zeitkanal benutzt, dessen PCM-Worte für diejenige Grossgruppe GG bestimmt sind, welcher der betreffende Multiplexer MX zugeordnet ist. In den Steuerspeicher wird also in den Speicherplatz des betreffenden Zeitkanals die Grossgruppennummer eingetragen. Dieser Vorgang gilt für beide Übertragungseinrichtungen gleichermassen. Weiterhin kann der Multiplexer MX mit einem Ausgangsspeicher ausgerüstet sein, welcher für jeden Zeitkanal einen Speicherplatz zum Einspeichern jeweils eines PCM-Wortes aufweist. Er dient zur Umsetzung der PCM-Worte auf andere Zeitkanäle, wenn in beiden Koppelgruppen G für eine Verbindung nicht der gleiche Zeitkanal benutzt werden kann. Zur Ansteuerung der Speicherplätze der beiden Speicher ist für jeden Multiplexer MX ein besonderer Generator zur Erzeugung der Zeitkanaladressen vorhanden.

Die Zuteilung freier Zeitkanäle in den einzelnen Koppelstufen d.h. die Wegesuche innerhalb des Koppelnetzes kann nun entweder durch die den einzelnen Koppelgruppen G und Grossgruppen GG gemeinsame zentrale Steuereinrichtung geschehen. Da die Wegesuche den Anmeldungsgegenstand nicht betrifft, wird im Rahmen dieser Beschreibung eine Einrichtung zur Wegesuche vorausgesetzt und auf diese weiter nicht eingegangen. Aus dem gleichen Grund wird auch eine Einrichtung zur Synchronisation der Zeitkanaladressgeneratoren und der Multiplexer M und MX vorausgesetzt, da diese zum Betrieb des Koppelnetzes unbedingt vorhanden sein müssen. Auch diese Einrichtung betrifft nicht den Anmeldungsgegenstand.

Zur näheren Erläuterung der Funktionen der einzelnen Einrichtungen des Koppelnetzes wird nachfolgend der Aufbau und die Durchschaltung einer Verbindung zwischen zwei Anschlussleitungen AL beschrieben.

1. Verbindung zweier Anschlussleitungen, welche an Koppelgruppen G der gleichen Grossgruppe GG angeschlossen sind.

Es wird davon ausgegangen, dass beispielsweise die Anschlussleitung AL1 der Koppelgruppe G1 eine Verbindung mit der Anschlussleitung AL2 der Koppelgruppe G2 wünscht. Aufgrund der auf der Anschlussleitung AL1 (G1) übermittelten Wahlinformation erkennt eine nicht dargestellte Steuereinrichtung den Verbindungswunsch und sucht einen freien Zeitkanal in beiden betreffenden Koppelgruppen G1 und G2.

Zunächst wird einmal davon ausgegangen, dass in beiden Koppelgruppen G der gleiche Zeitkanal frei ist. Daraufhin wird dieser der betreffenden Verbindung zugeteilt und in die beiden Speicherplätze der Register der Codecs C der beiden Anschlussleitungen AL die Adresse des zugeteilten Zeitkanals eingetragen.

Ausserdem wird in den Steuerspeicher ST des Multiplexers M der Koppelgruppe G2 in den Speicherplatz des zugeteilten Zeitkanals die Nummer der Koppelgruppe G1 für die Vorwärtsrichtung eingetragen, bei dem Steuerspeicher ST der Koppelgruppe G1 wird analog hierzu die Nummer der Koppelgruppe G2 für die Rückwärtsrichtung eingespeichert.

Werden unterschiedliche Zeitkanäle in den beiden Koppelgruppen benutzt, so wird, wie bereits beschrieben, durch die Multiplexer eine Zeitkanalumsetzung durchgeführt.

2. Verbindung zweier Anschlussleitungen, welche an Koppelgruppen G unterschiedlicher Grossgruppen GG angeschlossen sind.

Es wird davon ausgegangen, dass beispielsweise zwischen der Anschlussleitung AL1 der Koppelgruppe G1 eine Verbindung mit einer Anschlussleitung einer in der Zeichnung nicht dargestellten, mit Gx bezeichneten Koppelgruppe hergestellt werden soll. Nachdem durch die gezeigte Steuereinrichtung der Verbindungswunsch erkannt ist, wird zunächst durch diese in den beiden Koppelgruppen G1 und Gx ein freier Zeitkanal gesucht. Dabei ist zu berücksichtigen, dass durch die Parallelschaltung der Ein- und Ausgänge der Koppelstufe B2 zu den Ein- und Ausgängen der Koppelstufe B1 die Koppelstufe B1 bei der Wegesuche nicht zu berücksichtigen ist. In der Koppelstufe B2 können wiederum auch beliebige Zeitkanäle ausgewählt werden, da in den Multiplexern MX ebenso eine Zeitlagenumsetzung möglich ist.

**Patentansprüche**

1. Mehrstufiges, eine Umkehrgruppierung aufweisendes Koppelnetz zur vierdrähtigen Durchschaltung von Verbindungen zwischen Anschlussleitungen einer PCM-Vermittlungsanlage mit Zeit- und Raumkoppelstufen, wobei die erste Koppelstufe (A) aus einzelnen Koppelgruppen (G1 bis Gm) besteht, dadurch gekennzeichnet, dass die zweite (Raum-)Koppelstufe (B1) aus ebensovielen PCM-Leitungen gebildet wird, wie Koppelgruppen (G1 bis Gm) in der ersten (Zeit-) Koppelstufe (A) vorhanden sind, wobei jeweils die Sendesammelschiene (SS) einer Koppelgruppe (G) der ersten (Zeit-)Koppelstufe (A) mit der entsprechenden PCM-Leitung der zweiten (Raum-)Koppelstufe (B1) verbunden ist, dass alle PCM-Leitungen dieser Koppelstufe (B1) jeweils an einem koppelgruppenindividuellen Multiplexer (M) angeschlossen sind, welcher seinerseits über seinen Ausgang Zugang zu der Empfangssammelschiene (SE) der betrefenden Koppelgruppe (G) der ersten (Zeit-)Koppelstufe (A) hat und dass eine dritte (Raum-)Koppelstufe (B2) ankommend mit den Sendesammelschienen (SS) und abgehend mit den Empfangssammelschienen (SE) der einzelnen Koppelgruppen (G) der (Zeit-)Koppelstufe (A) verbunden ist.

2. Koppelnetz nach Anspruch 1, dadurch gekennzeichnet, dass die dritte (Raum-)Koppelstufe (B2) als sekundäres PCM-System ausgebildet ist, wobei dessen Bitrate ein Vielfaches der Bitrate der beiden ersten Koppelstufen (A, B1) beträgt und die Schnittstellen für die Eingangs- und Ausgangsleitungen durch Bitratenumsetzer (BRV, BRR) gebildet sind.

3. Koppelnetz nach einem der Ansprüche 1 oder 2, dadurch gekennzeichnet, dass jeweils mehrere Koppelgruppen (G) der ersten Koppelstufe (A) zu einer Grossgruppe (GG) zusammengefasst sind, dass die dritte (Raum-)Koppelstufe (B2) aus ebensovielen PCM-Leitungen gebildet wird, wie Grossgruppen (GG1 bis GGz) vorhanden sind und dass alle PCM-Leitungen dieser Koppelstufe (B2) jeweils an einem grossgruppenindividuellen Multiplexer (MX) angeschlossen sind.

4. Koppelnetz nach einem der Ansprüche 1 bis 3, dadurch gekennzeichnet, dass die Multiplexer (M, MX) der zweiten (B1) und dritten (B2) (Raum-) Koppelstufe mit jeweils einem Steuerspeicher (ST) ausgerüstet sind, welcher ebensoviele Speicherplätze besitzt, wie Zeitkanäle innerhalb eines Zyklus oder Rahmens vorhanden sind, und in welchen die Koppel- bzw. Grossgruppennummer des betreffenden Zeitkanals eingetragen wird, dessen PCM-Wort für die Koppelgruppe bzw. Grossgruppe des betreffenden Multiplexers bestimmt ist.

5. Koppelnetz nach einem der Ansprüche 1 bis 4, dadurch gekennzeichnet, das die Multiplexer (M und MX) der zweiten und dritten (Raum-)Koppelstufe mit jeweils einem weiteren Speicher versehen sind, welcher die Umsetzung von PCM-Worte in unterschiedliche Zeitlagen ermöglicht.

6. Koppelnetz nach einem der Ansprüche 1 bis 3, dadurch gekennzeichnet, dass die PCM-Leitungen der zweiten (Raum-)Koppelstufe (B1) jeweils einer Grossgruppe (GG) an die Bitratenumsetzer (BRV) mehrerer Grossgruppen (GG) angeschlossen sind.

7. Koppelnetz nach einem der Ansprüche 1 bis 6, dadurch gekennzeichnet, dass in der (Zeit-)Koppelstufe (A) die als 1-Kanal betriebenen Anschlussleitungen über jeweils einen Codec (C) an der Sende- und Empfangssammelschiene (SS, SE) der betreffenden Koppelgruppe (G) angeschlossen sind.

8. Koppelnetz nach einem der Ansprüche 1 bis 7, dadurch gekennzeichnet, dass eine PCM-Verbindungsleitung ankommend mit der Sende- und abgehend mit der Empfangssammelschiene (SS, SE) einer Koppelgruppe als einzige Anschlussleitung anschliessbar ist und dass als Schnittstelle zwischen der Verbindungsleitung und den Sammelschienen jeweils eine Zeitstufe und ein Kennzeichenumsetzer geschaltet ist.

**Claims**

1. A multistage switching network having a reversed trunking scheme for four-wire switching of connections between terminal lines of a PCM-exchange with time and space division switching stages, whereby the first switching stage (A) consists of individual switching groups (G1 to Gm) comprising: a second (space division) switching stage (B1) consisting of a number of PCM-lines (highways) equal to the number of switching stage (A), whereby each transmitting highway (SS) of one switching group of the first (time-division) switching stage (A) is connected with the respective PCM-line (highway) of the second (space-division) switching stage (B1), all PCM-lines (highways) of said switching stage (B1) are connected to a group individual multiplexer (M) having access to the receiving highway (SE) of the concerning switching group (G) of the first (time division) switching stage (A) via an exit of said multiplexer (M), a third (space division) switching stage (B2) is connected in the incoming direction with the transmitting (SS) and in the outgoing direction with the receiving highways (SE) of the individual switching groups (G) of the first (time division) switching stage (A).

2. A multistage switching network as in claim 1 comprising the third (space division) switching stage (B2) formed by a secondary PCM-system, whereby its bitrate is a multiple number of the bitrate of the first (A) and second (B1) switching stages and the interface for the input and output lines is formed by bitrate converters (BRV, BRR).

3. A multistage switching network as in claims 1 or 2 comprising the combination of several groups (G) of the first (time division) switching stage (A) into one major switching group (GG) and the third (space division) switching stage (B2) is formed by a number of PCM-lines corresponding to the number of major switching groups (GG) and all PCM-lines of the third (space division) switching stage (B2) are connected to a major switching group individual multiplexer (MX).

4. A multistage switching network as in one of claims 1 to 3 comprising the multiplexers (M, MX) of the second and third (space division) switching stages (B1, B2) each equipped with a control memory (ST) each having the same number of storage positions as there are time slots within one cycle or frame, whereby the number of the switching group respectively the number of the major switching group of the respective time slot carrying the PCM-word assigned to a switching group or major switching group is stored in the storage position of the control memory of the respective multiplexer.

5. A multistage switching network as in one of claims 1 to 4 comprising the multiplexers (M, MX) of the second and third (space division) switching stages, each additionally equipped with a memory for the transposition of the PCM-word to different time slots.

6. A multistage switching network as in one of claims 1 to 5 comprising the PCM-lines of the second (space division) switching stage (B1) of a major switching group connected to the bitrate converters (BRV) of several major switching groups (GG).

7. A multistage switching network as in one of claims 1 to 6 comprising the terminal lines operated as single channel lines in the (time-division) switching stage (A) are connected to the transmitting and receiving highways (SS, SE) of the respective switching group (G) via an individual codec (C).

8. A multistage switching network as in one of claims 1 to 7 comprising the connection of a PCM-trunk line to the transmitting highway in the incoming direction and in the outgoing direction to the receiving highway of a switching group as one and only terminal line and as an interface between the trunk line and the highways an individual time delay stage and a signal converter is connected.

**Revendications**

1. Réseau de connexion à plusieurs étages, constituant un groupement à double sens pour l'établissement de liaisons à quatre fils entre des lignes de raccordement d'une installation de télécommunications à modulation par impulsions codées avec des étages de commutation temporelle et spatiale, et dans lequel le premier étage (A) est constitué par des groupes individuels de sélection, (G1 à Gm), réseau de connexion caractérisé en ce que le deuxième étage de sélection (B1) à commutation spatiale est constitué avec autant de lignes à modulation par impulsions codées qu'il y a de groupes de sélection (G1-Gm) dans le premier étage de sélection (A) à commutation temporelle, chacune des lignes communes d'émission (SS) d'un groupe de commutation (G) du premier étage de sélection (A) à commutation temporelle étant reliée à la ligne correspondante à modulation par impulsions codées du second étage de sélection (B1) à commutation spatiale, toutes les lignes à modulation par impulsions codées de cet étage de sélection (B1) étant connectées chacune à un multiplexeur (M) individuel par groupe de connexion qui, de son côté, a accès par sa sortie à la ligne commune de réception (SE) du groupe de connexion (G) respectif du premier étage de sélection (A) à commutation temporelle, et un troisième étage de sélection (B2) à commutation spatiale étant relié pour l'entrée avec la ligne commune d'émission (SS) et pour la sortie avec la ligne commune de réception (SE) du groupe de connexion (G) individuel de l'étage de sélection (A) à commutation temporelle.

2. Réseau de connexion selon la revendication 1 caractérisé en ce que le troisième étage de sélection (B2) à commutation spatiale est agencé en système secondaire à modulation par impulsions codées, dans lequel le débit binaire est plusieurs fois supérieur au débit binaire écoulé par les deux premiers étages de sélection (A, B1), l'interface avec les lignes d'entrée et de sortie étant assurée par un convertisseur de débit binaire (BRV, BRR).

3. Réseau de connexion selon l'une des revendications 1 et 2, caractérisé en ce que plusieurs groupes de connexion (G) du premier étage de sélection (A) sont assemblés en un groupe majeur (GG), le troisième étage de sélection (B2) à commutation spatiale étant constitué par autant de lignes à modulation par impulsions codées qu'il y en a dans les groupes majeur (GG1, GGz), et toutes les lignes à modulation par impulsions codées qu'il y en a dans les groupes majeur (GG1, GGz), et toutes les lignes à modulation par impulsions codées de cet étage de sélection (B2) étant connectées chacune à un multiplexeur (MX) individuel par groupe majeur.

4. Réseau de connexion selon l'une quelconque des revendications 1 à 3, caractérisé en ce que les multiplexeurs (M, MX) du second (B1) et du troisième (B2) étages de sélection à commutation spatiale comportent chacun une mémoire de commande (ST) qui comprend autant de positions de mémorisation qu'il y a de canaux temporels à l'intérieur d'un cycle ou d'une trame, et dans laquelle est introduit le numéro de groupe de connexion ou de groupe à grande capacité dont le mot de modulation par impulsions codées est destiné au multiplexeur respectif du groupe de connexion ou du groupe majeur.

5. Réseau de connexion selon l'une quelconque des revendications 1 à 4, caractérisé en ce que les multiplexeurs (M, MX) des second et troisième étages de sélection à commutation spatiale sont prévus chacun avec une autre mémoire qui permet le passage d'un mot de modulation par impulsions codées dans une position temporelle différente.

6. Réseau de connexion selon l'une quelconque des revendications 1 à 3, caractérisé en ce que les lignes à modulation par impulsions codées du second étage de sélection (B1) à commutation spatiale d'un groupe majeur (GG) sont connectés aux convertisseurs de débit binaire (BRV) de plusieurs groupes majeur (GG).

7. Réseau de connexion selon l'une quelconque des revendictions 1 à 6, caractérisé en ce que dans l'étage de sélection (A) à commutation temporelle les lignes de raccordement fonctionnant comme des canaux uniques sont connectées aux lignes communes d'émission et de réception (SS, SE), chacune par un codeur-décodeur (C).

8. Réseau de connexion selon l'une quelconque des revendications 1 à 7, caractérisé en ce qu'une ligne interinstallation à modulation par impulsions codées peut être connectée à l'arrivée avec la ligne commune d'émission et au départ avec la ligne commune de réception (SS, SE) d'un groupe de connexion comme une ligne de raccordement unique, l'interface entre la ligne interinstallation et les lignes communes étant assurée par un étage temporel et un convertisseur d'identification.